(19) Europäisches Patentamt
European Patent Office
Office européen des brevets

(11) EP 4 765 815 A1

## (12) EUROPEAN PATENT APPLICATION

(43) Date of publication:
24.06.2026 Bulletin 2026/26

(21) Application number: 24307254.3

(22) Date of filing: 20.12.2024

(51) International Patent Classification (IPC):
H04N 19/52 (2014.01)     H04N 19/57 (2014.01)
H04N 19/59 (2014.01)     H04N 19/593 (2014.01)

(52) Cooperative Patent Classification (CPC):
H04N 19/52; H04N 19/57; H04N 19/59;
H04N 19/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• RADOSAVLJEVIC, Milos
  35000 RENNES (FR)
• LE LEANNEC, Fabrice
  35830 BETTON (FR)
• NASER, Karam
  35250 MOUAZE (FR)
• DUMAS, Thierry
  35700 RENNES (FR)

(74) Representative: Vossius & Partner
Patentanwälte Rechtsanwälte mbB
Siebertstraße 3
81675 München (DE)

## (54) OPTIMIZING BLOCK VECTOR SEARCH PROCESS

(57) Video coding (e.g., encoding and/or decoding) may be performed by optimizing a block vector search process. In examples, a device (e.g., a decoder for video decoding) may be configured to obtain a plurality of candidate block vectors (BVs) for a current video block. The device may determine a refinement area associated with a current BV from the plurality of candidate BVs. The refinement area may define BV refinement candidates for the current BV. The device may determine a refined BV, for example, based on a cost analysis. The cost analysis may be applied to (e.g., only) a subset of the BV refinement candidates defined by the refinement area. The device may add the refined BV to a candidate BV list for the current video block.

FIG. 11

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for performing video coding (e.g., encoding and/or decoding) by optimizing a block vector search process. In examples, a device (e.g., a decoder for video decoding) may be configured to obtain a plurality of candidate block vectors (BVs) for a current video block. The device may determine a refinement area associated with a current BV from the plurality of candidate BVs. The refinement area may define a plurality of BV refinement candidates. The device may determine, for only a subset of the BV refinement candidates defined by the refinement area, respective costs (e.g., template matching costs) associated with the subset of refinement BV candidates. The device may select one or more BV refinement candidates from the subset of BV refinement candidates based at least on the determined costs, and add the one or more selected BV refinement candidates to a candidate BV list for the current video block.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 illustrates an example of an intra template matching search area.

FIG. 5 illustrates an example of sparse search and refinement operations in an ITMP search process.

FIG. 6 illustrates an example of a simplified workflow of an ITMP process.

FIG. 7 illustrates an example of ITMP-AR-BVP's construction.

FIG. 8 illustrates an example of five positions in a reference block.

FIG. 9 illustrates an example of block vector filtering in ITMP fusion.

FIG. 10 illustrates an example of adjacent and non-adjacent spatial merge candidates.

FIG. 11 illustrates an example of sparse refinement.

FIG. 12 illustrates an example of sparse refinement with a smaller window defined inside a larger refinement window.

FIG. 13 illustrates an example of sparse refinement.

FIG. 14 illustrates an example of sparse refinement where distant BV candidates may not be tested.

FIG. 15 illustrates an example of sparse refinement that combines several approaches (e.g., as described herein).

DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

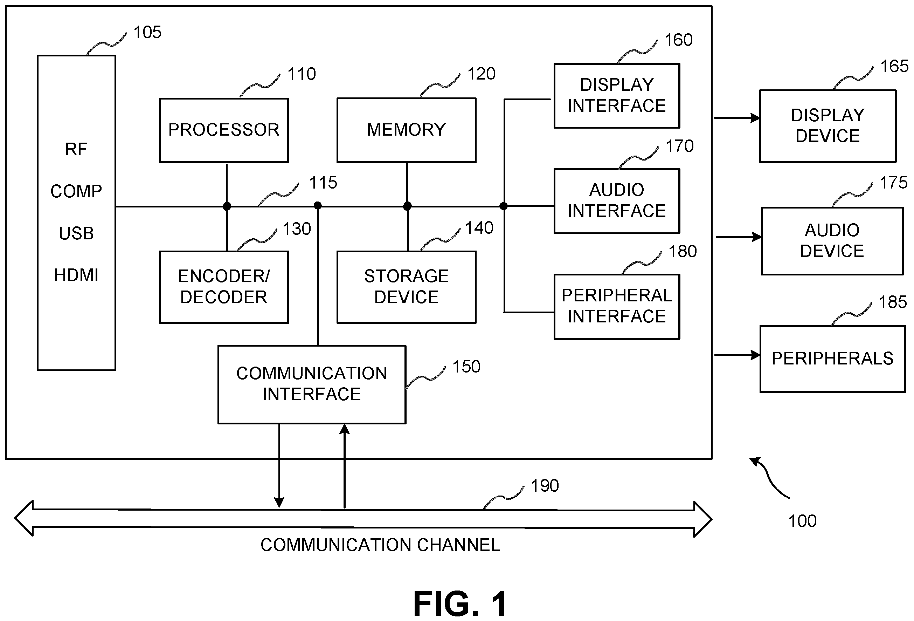

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

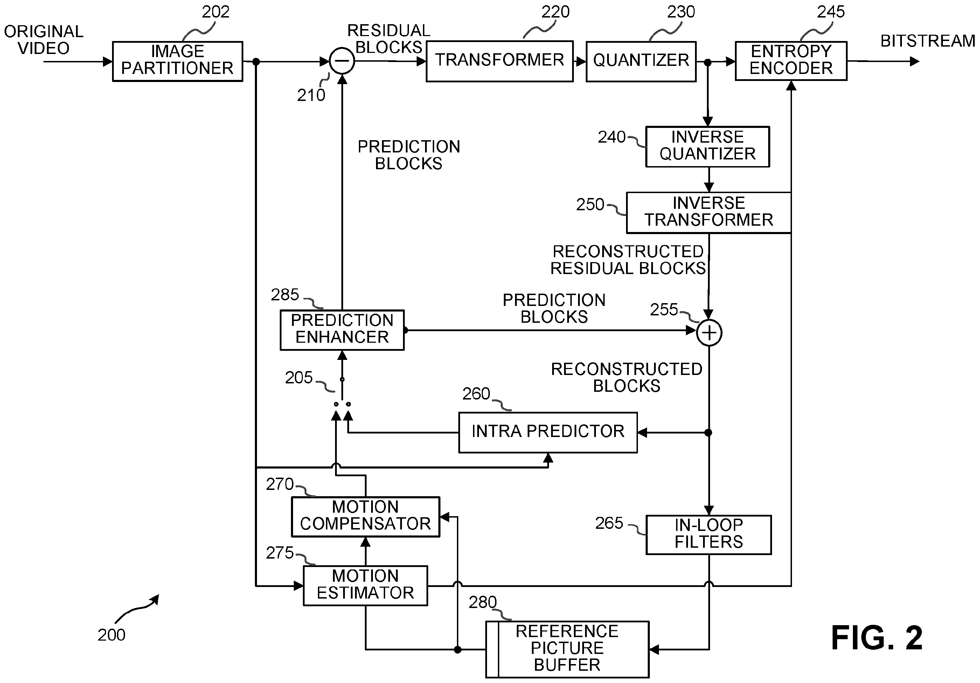

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

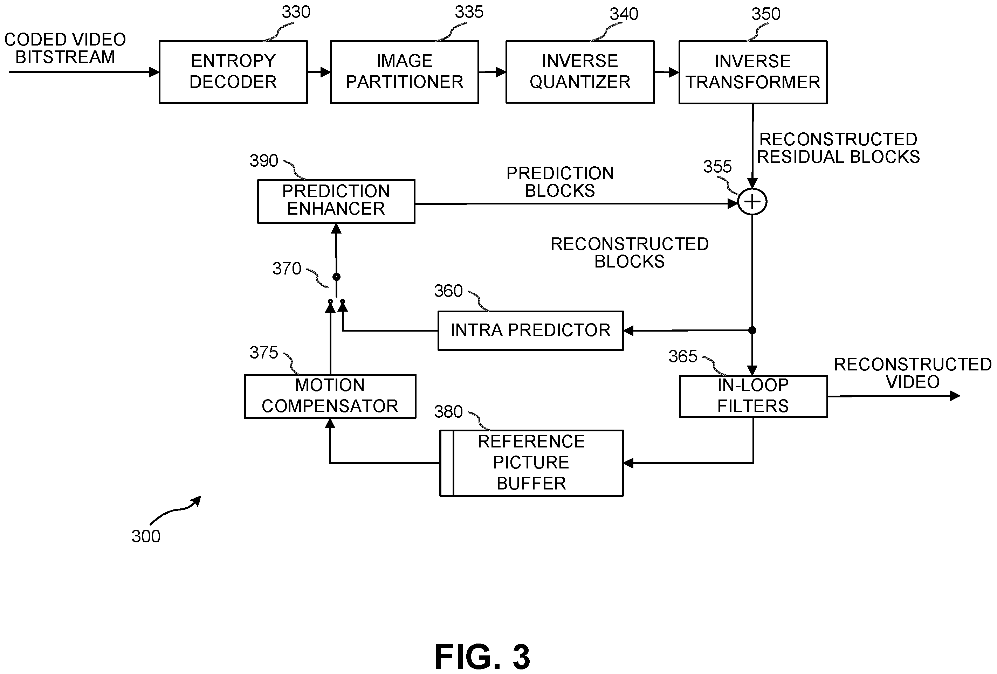

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for performing video coding (e.g., encoding and/or decoding) by optimizing block vector search process.

Intra Template Matching Prediction (ITMP) prediction mode may be implemented (e.g., in ECM). Intra template matching prediction (ITMP) is an (e.g., a special) intra prediction mode that copies a (e.g., the best) prediction block from the reconstructed part of the current frame, whose L-shaped template matches the current template. For a predefined search range, the encoder may search for the most similar template to the current template in a reconstructed part of the current frame. The encoder may use the corresponding block as a prediction block. The encoder may (e.g., then) signal the usage of the mode, e.g., so that the decoder side may perform the same prediction operation.

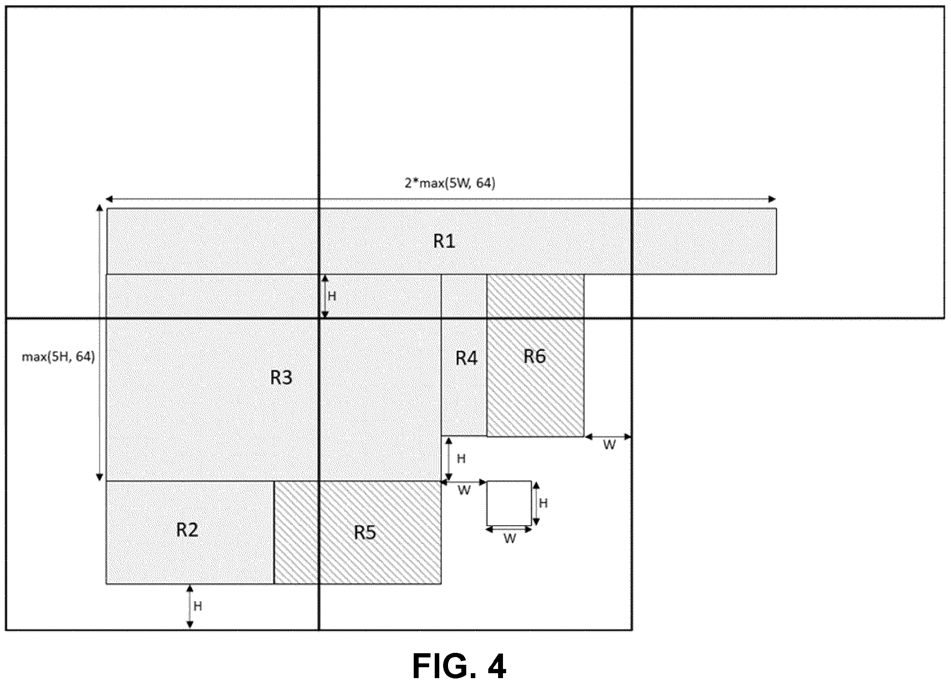

The prediction signal may be generated, for example, by matching the L-shaped, top-only or left-only causal neighbor of the current block with another block in a predefined search area, e.g., as shown by example in FIG. 4. As shown in FIG. 4, there may be six (6) predefined search areas, e.g., R1 to R6, that include the reconstructed samples from the top and left coding tree units (CTUs) as well as part of the reconstructed samples within the current CTU that are located above, left, bottom-left and top-right to the current block.

Sum of absolute differences (SAD) may be used as a cost function.

A search order of the six (6) regions may be utilized, e.g., R4, R5, R6, R1, R2, and R3. The decoder may construct a candidate list of up to 19 template matching block vectors (BVs), which may be ranked in ascending order, e.g., according to the template cost. One or more of the following modes may be supported: single predictor; fusion of multiple predictors; sub-pel precision; linear filter model; ITMP extension to learned image compression (LIC) (ITMP-LIC), decoder side intra mode derivation (DIMD) (ITMP-DIMD), and/or spatial geometric partitioning mode (SGPM) (ITMP-SGPM); and/or ITMP extension to template-based intra mode derivation (TIMD).

In an example of a single predictor mode, a single predictor may be selected from the candidate list.

In an example of a fusion of multiple predictors mode, multiple predictors may be blended to derive the final prediction block. The blending weights may be computed, for example, from the template matching cost of each predictor, or with a Wiener-filter based weight derivation method.

In an example of a sub-pel precision mode, sub-pel precision may be supported if/when a single predictor is used. A new candidate list may be constructed, for example, by including the selected integer block vector and surrounding 1/2-pel and 1/4-pel sub-pel positions. The list may be sorted, for example, based on the same cost function used for the integer BV search. The first two candidates may (e.g., then) be allowed to be selected, for example, with one single flag being signaled from encoder to decoder.

In an example of a linear filter model mode, a linear filter model may be learned between the reference template and current template. The linear filter model may be applied to the reference block. A linear filter model mode may be used for a single predictor, for example, if/when sub-pel precision is not used.

ITMP with local illumination compensation may be allowed, for example, based on one or more of the following considerations. For example, usage of LIC and feature-based linear model (FLM) (e.g., convolution cross-component model (CCCM)-like filtering) may be mutually exclusive for a given CU. Usage of LIC together with fusion in ITMP may be allowed. Top-only and Left-only template usage for LIC model determination may be allowed for screen content coding. The top-left template (e.g., only the top-left template) may be employed for camera-captured coding. Multi Mode Linear Model (MMLM) may be supported similarly to IBC-LIC, for screen content coding.

An ITMP search process may employ mean-removed SAD (MRSAD), e.g., rather than SAD distortion function, for example, if/ when LIC is used for a given CU. The position of the pixel at the top-left of each candidate reconstructed block may be shifted (e.g., by half the search sampling factor vertically and horizontally with respect to the associated position) in the non-LIC case, for example, if/when LIC is used for a given CU in the ITMP search process. There may be exceptions. A horizontal/vertical shift may be canceled for a candidate reconstructed block with top-left pixel having a shifted position, for example, if the horizontal/vertical shift causes the candidate reconstructed block to go out of the bounds of the ITMP search region.

The dimensions of (e.g., all) regions (SearchRange_w, SearchRange_h) may be set proportional to the block dimension (BlkW, BlkH) to have a fixed number of SAD comparisons per pixel, for example, in accordance with Eq. (1) and Eq. (2):

$$\text{SearchRange\_w} = \min(64, a * \text{BlkW}) \tag{1}$$

$$\text{SearchRange\_h} = \min(64, a * \text{BlkH}) \tag{2}$$

With reference to Eq. (1) and Eq. (2), '*a*' may be a constant that controls the gain/complexity trade-off. In some examples, '*a*' may be equal to five (5).

FIG. 4 illustrates an example of an intra template matching search area.

The complexity of ITMP may be proportional to the template matching process, e.g., where the difference between the templates of the current block and of the predicted block may be computed for each position (e.g., BV candidate) within the available search range. The search range of (e.g., all) search regions may be subsampled, e.g., by a factor of three (3), for example, to speed-up the template matching process. Subsampling the search range may be called sparse search. For example, every third position in horizontal and vertical direction may be tested, e.g., in a first operation. Tested positions (e.g., block vectors) in sparse search may be referred to as sparse BV candidates or sparse candidates. A refinement process may be performed, for example, after the first operation is finished, e.g., after (all) positions/candidates within the sparse search have been tested and their template cost has been calculated. The refinement may be performed, for example, via a second template matching search around (e.g., several best) candidates from the previous operation (e.g., sparse search) with a reduced range.

The ITMP tool may be enabled for coding units (CUs) with size less than or equal to a threshold size (e.g., 64) in width and/or height. The maximum CU size for intra template matching may be configurable.

The ITMP may be signaled at CU level through a dedicated flag, for example, if/when DIMD is not used for the current CU. That is, if ITMP is used, then other (e.g., the rest of) intra modes may be inferred to be unused.

ITMP may be used for natural and screen content.

Multi-candidate ITMP may be used. Multi-candidate ITMP may include constructing a candidate list with the candidate BVs ranked in ascending order of their template matching costs. The index of the selected candidate may be signaled in the bitstream.

Candidate list construction and ranking BVs in ascending order based on their template matching costs may be performed, for example, by utilizing sparse search and refinement operations (e.g., as previously described).

In some examples, ITMP may be used to select only one candidate, e.g., one BV with the smallest template matching cost. The same process may be performed on the encoder and decoder side, which may avoid additional signaling to indicate the final predictor. In some examples (e.g., camera captured content), it may be difficult for the decoder to find a (e.g., perfect) match. There may (e.g., usually) be (e.g., several) blocks that are similar to the current block and their template matching cost may be close. The BV candidate with the smallest template matching cost may not be the best predictor.

Hence, multiple candidates may be used for ITMP. A candidate list may be constructed with the candidate BVs ranked in ascending order based on their template matching costs. An index may be signaled in the bit-stream to indicate which candidate BV from the final list is actually used for the current block.

Template matching may be used to select a shortlist of promising candidates from a large number of possible BVs, allowing the encoder, which can refer to the original current block, to make the final decision.

An example of simplified syntax is as follows:

```
intra_tmp_flag
if(intra_tmp_flag) {
   intra_tmp_idx
} ...
```

In some examples, the intra_tmp_flag equal to one (1) may mean that current block uses ITMP. The intra tmp idx may (e.g., further) indicate which BV in the candidate BV list may be used to identify the prediction block.

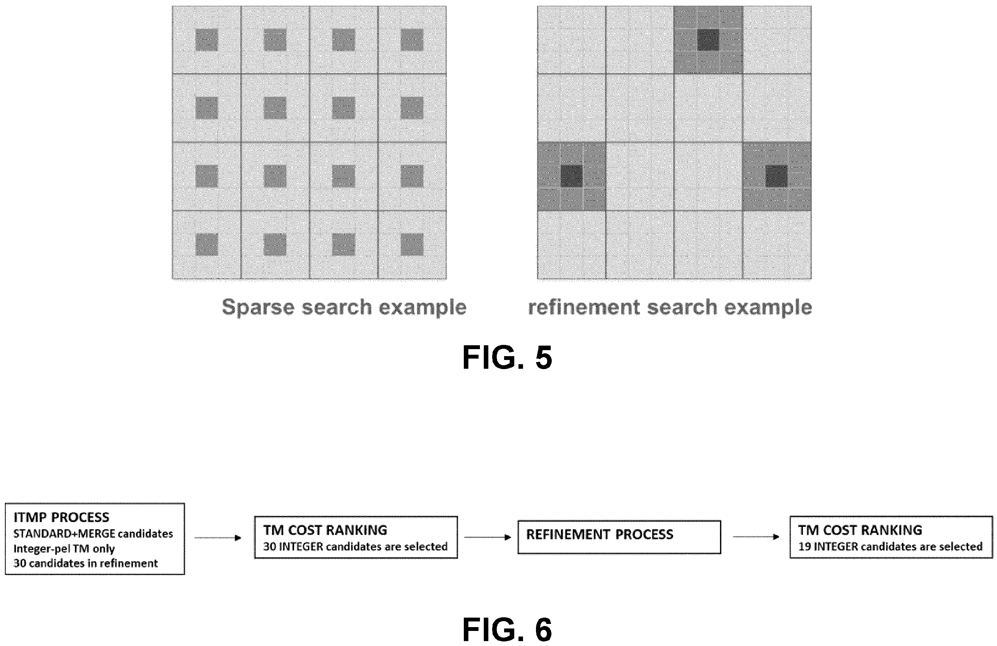

A candidate list may be built, for example, using a sparse search and a refinement search, e.g., as illustrated by example in FIG. 5. In some examples of a sparse search, the sub-sampling factor may be three (3) (e.g., indicating every third position in horizontal and vertical direction is tested in the sparse search). The top 30 BVs may be maintained, e.g., based on their template matching cost. The refinement search may test a block (e.g., each 3x3 block) around each of the 30 BVs. The top (e.g., 19) BVs after refinement may be selected to form a final candidate list. One out of the (e.g., 19) final candidates may be selected (e.g., by the encoder) as a final predictor. An index of the final predictor may be signalled to the decoder. there may be other implementations that use different signalling approaches and different search strategies.

FIG. 5 illustrates an example of sparse search and refinement operations in an ITMP search process.

ITMP syntax may be coded/decoded, for example, if the DIMD flag is false and if the ITMP sps flag is true. An example of ITMP syntax is as follows:

```
intra_tmp_flag
if(intra_tmp_flag) {
   intra_tmp_fusion_flag
   if(intra_tmp_fusion_fiag) {
      intra_tmp_fusion_idx
      intra_tmp_lic_fiag
   } else {
      intra_tmp_idx
      intra_tmp_filter_flag
      if(!intra_tmp_filter_flag) {
        intra_tmp_lic_flag
      }
      if(!intra_tmp_filter_flag and !intra_tmp_lic_flag ) {
         intra_tmp_sub_pel_precision_idx
         if(intra_tmp_sub_pel_precision_idx != 0) {
            intra_tmp_sub_pel_direction_idx
         }
      }
   }
} ...
```

The flag intra_tmp_flag may indicate whether the intra prediction type for the current block is ITMP or not.

The flag intra_tmp_fusion_flag may indicate whether fusion is used or not for the current block.

The index intra_tmp_fusion_idx may specify the candidate set that may be used for ITMP fusion. The range of index intra_tmp_fusion_idx may be, for example, zero (0) to two (2). The index intra_tmp_fusion_idx may be used to indicate one of the (e.g., three) candidate sets, e.g., {BV0 to BV4}, {BV5 to BV9}, {BV10 to BV14}.

The flag intra_tmp_lic_fiag may indicate if ITMP with LIC is used.

The index intra_tmp_idx may specify the index of BV in the candidate list that may be used for current block. The range of intra_tmp_idx may be, for example, zero (0) to 18. Candidates from L-shape template, top template, and/or left template may be included in the same candidate list.

The index intra_tmp_sub_pel_precision_idx may specify the precision index for the current block. The range of intra_tmp_sub_pel_precision_idx may be, for example, zero (0) to three (3), which may be used to indicate integer-pel precision, 1/2-pel precision, 1/4-pel precision, and 3/4-pel precision, respectively.

The index intra_tmp_sub_pel_direction_idx may specify the sub-pel direction index for the current block. The range of intra_tmp_sub_pel_phase_idx may be, for example, zero (0) to seven (7).

More candidates may be added to an ITMP search process, for example, by utilizing BVs of surrounding blocks. ITMP may employ an implicit merge mode, where merge candidates may be considered without signaling a merge flag or index. The reference positions pointed to by the block vectors of the adjacent and non-adjacent merge candidates may be used as additional BV candidates beyond the default search areas.

In ITMP mode, a template matching search process within pre-defined search regions may be performed to obtain (e.g., up to 19) candidate BVs. A sparse search may be used to shorten the most promising candidates (e.g., to 30). A refinement may be performed around the (e.g., 30) candidates to finally obtain the (e.g., 19) candidates. However, ITMP search may not take into consideration block vector information of the neighboring PUs. An ITMP search may be augmented with new candidates, e.g., block vectors of neighboring PUs. The new candidates may be called merge BV candidates or merge candidates. ITMP search may be augmented with BVs coming from the (e.g., several) prediction modes that utilize BVs. Tho modes may include IBC, ITMP, SGPM, TIMD, and DIMD modes. ITMP may be augmented with BVs from those modes. Augmentation with BVs may improve the ITMP by further including probable candidates during the ITMP search process. The BVs from neighboring blocks may be more correlated with the properties of the current block. Hence, the ITMP candidates may be extended with new block vectors (e.g., so called merge candidates).

An ITMP mode that uses only sparse search and refinement may test BVs coming from ITMP sparse search and refinement and also BVs coming from outside the (e.g., typical) ITMP search range, e.g., outside the search range depicted by example in FIG. 4.

In Intra Block Copy (IBC) merge mode, a merge index may be coded to indicate which neighboring PU block vector is selected. In that sense, a prediction unit (PU) coded in IBC merge mode may utilize already selected BVs of the neighbouring PUs, which may be better correlated with the current PU. During IBC merge mode, the ITMP BVs may be used as IBC merge candidates.

Utilization of information of neighboring PUs while performing a template matching search for ITMP may lead to improved performance. The same template matching cost process may be used to rank the new candidates among already computed candidates, e.g., such as those coming from the sparse search.

The merge candidates may include local and non-local neighboring candidates. A BV found within the local or non-local neighborhood of the current PU may be added to the merge candidates. Merge candidates may (e.g., then) be tested after (or before) the sparse candidates. The template cost for the merge candidates may be obtained in the same way as for other candidates, e.g., same as for the sparse candidates. Merge candidates may be ranked together with other candidates, for example, based on their template matching cost. In some examples, the top (e.g., 30) candidates may be selected for further refinement. Hence, by additionally using merge candidates, the top (e.g., 30) candidates may include some candidates that are not part of the sparse search grid (e.g., without merge candidates, the top (30) candidates may be only sparse candidates). In some examples (e.g., ECM implementation, such as ECM-14) there may be (e.g., up to 25) local and non-local PUs that may be selected during the selection of new merge candidates. The number of local and non-local Pus may be an implementation decision, which may vary to be more or less.

The top (e.g., 30) candidates may be refined with a second template matching operation.

In some implementations, a refinement process of merge candidates may be different than for candidates that come from the native sparse search. For example, instead of using a 3x3 refinement around the selected candidate, an 11x11 refinement may be used, e.g., if a candidate is from the merge candidates.

Candidates (e.g., all candidates) that are tested in refinement process may be ranked (e.g., based on TM cost). The final (e.g., 19) candidates may be selected after refinement. One out of the final candidates (e.g., 19 candidates) may be selected by the encoder, which may signal an index for the selected candidate.

ITMP candidates may be enriched with new BVs that have not previously been tested by the ITMP process. The additional BVs may include, for example, IBC block vectors, whose search region may be larger than ITMP and/or may include some candidates that are not part of the sparse search candidates. The added BVs may be correlated with the current block statistics, e.g., as they were selected previously for predicting nearby blocks.

Merge candidates may be (e.g., further) enriched, for example, by adding more merge candidates coming from blocks coded in IBC or ITMP mode. Additional merge candidates may include bi-prediction IBC candidates. Additional merge candidates may (e.g., also) include best-by-cost ITMP candidates.

In some examples (e.g., if the neighboring PU is coded in Bi-Prediction IBC mode), instead of just one BV, one or more additional BVs from Bi-Prediction IBC mode may be used and added to the merge candidates. Multiple BVs (e.g., instead of one BV) from one PU coded in Bi-Prediction IBC mode may be added to the merge candidates.

In some examples (e.g., if the neighboring PU is coded in ITMP mode), a BV selected for the neighboring PU may be added to the merge candidates. The BV may be indicated, for example, by the ITMP index (e.g., intra_tmp_idx). The BV may not be associated with the smallest template cost. The BV with the smallest template cost (e.g., the candidate with the intra_tmp_idx equal to zero (0)) may be included, for example, if intra_tmp_idx is larger than zero (0). In other words, the candidate that is the first in the list of (e.g., 19) final candidates may be included.

FIG. 6 illustrates an example of a simplified workflow of an ITMP process.

Computational cost may be maintained within reasonable limits, for example, by applying a pre-selection of the merge candidates. Pre-selection may be applied prior to template cost calculations. For example, zero or more (e.g., some) candidates may be discarded prior to template matching cost computations to reduce complexity. Pre-selection may be performed in a way that coding gain is not significantly degraded (e.g., when compared to utilizing all available merge candidates). One or more other pre-selection criteria may be used, e.g., adding more importance to complexity reduction. For example, (e.g., only) N out of M available merge candidates may be used if M>N. All M available candidates may be used, for example, if M<=N.

In some examples, merge candidates that are located outside of an (e.g., a typical) ITMP search region (e.g., as shown in FIG. 4) may be prioritized when using merge candidates. In some examples, merge candidates may be reordered based on their position. For example, merge candidates outside an ITMP search region may be placed first in the processing order. A number of candidates (e.g., up to 10 candidates) may be tested (e.g., N=10).

A refinement process may be performed for the best (e.g., 30) candidates, which may be selected by using template matching costs. In some examples, a different refinement may be used for candidates coming from sparse search (e.g., as in native ITMP) and candidates coming from merge candidates. For example, a 3x3 refinement may be used for each candidate in the first set of candidates and an 11x11 refinement may be used around each candidate in the second set of candidates.

A relaxed refinement strategy may be implemented. A 3x3 refinement process may be implemented, for example, if the merge candidate is within the ITMP search region (e.g., one of the regions illustrated in FIG. 4). An 11x11 refinement may be implemented, for example, if the merge candidate is located outside the ITMP search region.

In some examples, merge candidates coming from the IBC block may utilize 11x11 refinement while merge candidates coming from other neighboring blocks may use 3x3 refinement, e.g., regardless of their position relative to the ITMP search region.

Search window sizes referred to herein (e.g., 3x3 and 11x11 search windows) are used as examples. Search window sizes may be different in a wide variety of implementations.

In some examples, auto relocated block vector prediction (AR-BVP) may be introduced into BVs merge candidates' construction. AR-BVP may be derived, for example, as a guiding BV plus a BV of a reference block, located by the guiding BV. The initial guiding BV may be set to be an existing BV that is already in merge candidates. A number of AR-BVP candidates (e.g., up to 20 AR-BVP candidates) may be constructed to get more merge candidates. An AR-BVP process may be performed, for example, after (e.g., all) merge candidates are collected from neighboring blocks, and are added on top of existing merge candidates.

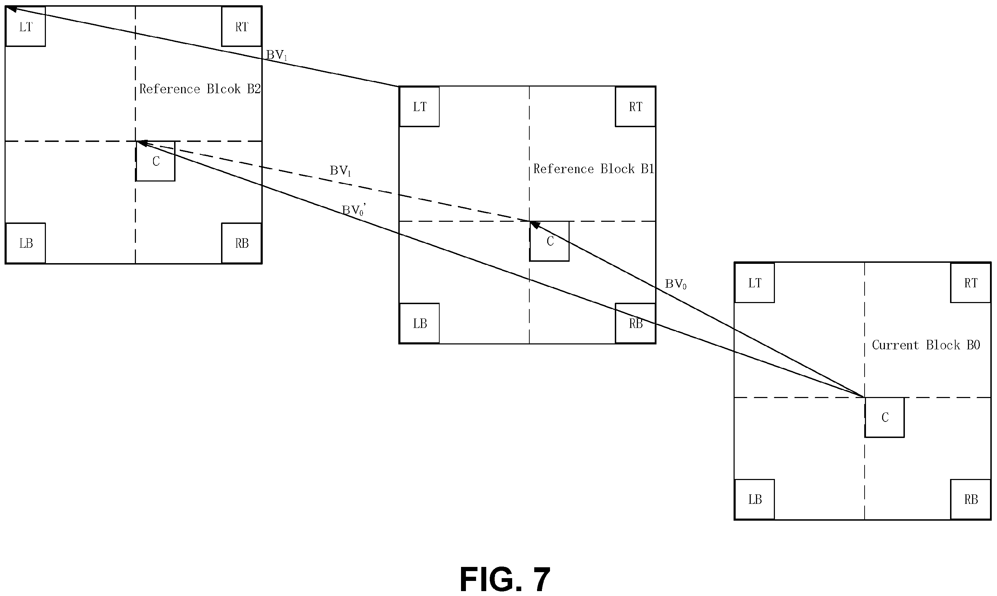

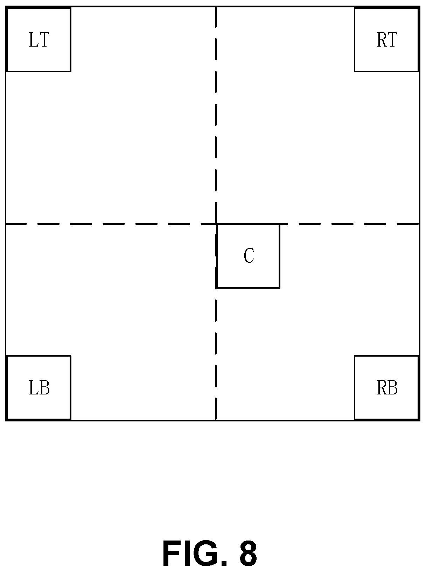

As shown by example in FIG. 7, a guiding block vector BV0 (e.g., an existing BV already part of the merge candidates) associated with the current block B0 points at a reference block B1. If B1 has a BV denoted as BV1 pointing at a reference block B2, then BV0', given by BV0' = BV0 + BV1, may be defined as the AR-BVP. BV1 itself may (e.g., also) be (e.g., directly) used as AR-BVP to get more available candidates. When deriving AR-BVP, the positions (e.g., all five positions), including top-left (e.g., LT in FIG. 8), top-right (e.g., RT in FIG. 8), center (e.g., Ctr in FIG. 8), bottom-left (e.g., LB in FIG. 8), and bottom-right (e.g., RB in FIG. 8) positions of the reference block, may be checked to find the reference block's BVs. The merge candidates from the neighboring PUs and the constructed AR-BVPs may be used as guiding BVs. The construction may be recursively processed until the number of AR-BVPs reaches a limit (e.g., 20) or until no new AR-BVPs are constructed.

In some examples, up to 20 AR-BVPs can be constructed. A limitation on the number of AR-BVPs may be imposed, for example, to reduce complexity. An AR-BVP candidate selected for refinement may have a refinement range, e.g., 3x3.

The same template matching cost may be used to compare the merge positions and the default positions.

Fig. 7 illustrates an example of ITMP-AR-BVP's construction.

Fig. 8 illustrates an example of five positions in a reference block.

An AR-BVP based on the sparse candidates may be used instead of or in addition to an AR-BVP based on the merged candidates. The candidates derived from the sparse candidates may be used as guiding BVs to construct AR-BVPs, for example, by adding the BVs of the reference blocks. The AR-BVP candidates may be added to the merge candidates.

Auto-relocated block vector prediction (AR-BVP) candidates may be added to the IBC merge and AMVP candidates, e.g., right after the HMVP candidates, for example, in a similar manner as for ITMP mode.

Similar principles may be used in inter prediction where motion vectors are utilized. Chained motion vector prediction (CMVP) candidates may be introduced as merge candidates, which may be inserted after HMVP candidates for regular merge and TM merge modes. The CMVP may share a similar idea with AR-BVP, as described herein. CMVP candidates may be derived as the accumulation of the recursively traced MVs and BVs based on the pre-derived MVs. In some examples, CMVP candidates may be derived for each merge index and each reference picture list. The traceable reference pictures may be restricted to the reference pictures in the reference picture list.

More merge candidates may be added, for example, by using the block vectors (BVs) from the History-Based Motion Vector Prediction (HMVP) list. An ITMP BV may be stored for HMVP. In some examples, block vectors of an HMVP list may be used (e.g., only) in IBC mode, but may not be used in ITMP mode. In some examples, the merge candidates may be extended with the HMVP candidate BVs.

Candidates and their refinement regions may be merged (e.g., clustered).

Additional merge candidates may improve performance, for example, by imposing diversity of the possible BVs to be tested. However, additional merge candidates may introduce additional complexity. ITMP mode may extend the sparse candidates with additional merge candidates acquired from the spatial and non-spatial (e.g., local and non-local) neighboring PUs. A refinement stage may (e.g., then) be carried out, e.g., using a local search window around selected BV candidate(s). The refinement window size may vary, for example, based on the candidate type. The refinement windows of some candidates may overlap with other candidates' refinement windows. Other modes (e.g., SGPM, TIMD, and/or DIMD), for example, in addition to ITMP mode, may use BV candidates and/or a refinement operation. Refinement windows may overlap in other modes in the same or similar way that refinement windows may overlap in ITMP, which may introduce repetitive calculations, e.g., if not managed properly.

A refinement window size for the sparse candidates (e.g., In ITMP mode) may be $\pm \frac{SI}{2}$, where *SI* may be a subsampling factor, e.g., three (3) in case of ITMP. Consequently, refinement windows of the sparse candidates may never overlap. However, overlap may occur due to introduction of merge and AR-BVP candidates. For example, the refinement window size for the merge BV candidates may be 11x11, and they may point in or out of the ITMP search region. Thus, the inner merge candidates' refinement window may overlap the sparse candidates' refinement window. Furthermore, the distance between the BV merge candidates may not be constrained, so the merge's refinement window may overlap.

The refinement window around each BV candidate may vary based on the candidate type. For example, merge candidates may use an 11x11 window size, and AR-BVP and sparse candidates may use a 3x3 window size. The distance between the merge, AR-BVP, and sparse candidates may not be constrained, so the refinement windows may overlap.

A method may test whether the refinement windows overlap. For example, if two refinement windows overlap, the BV candidate with the lower template cost may be kept and ranked with other candidates for further refinement. A new refinement window that comprises both individual refinement windows may be determined (e.g., subsequently determined) for the selected/winning candidate. The refinement region may be enlarged, for example, by merging two regions into one single refinement window that includes both individual regions.

ITMP may employ a (e.g., an implicit) merge mode, where merge candidates may be considered without signaling a merge flag or index. The reference positions pointed to by the block vectors of (e.g., all) the adjacent and non-adjacent merge candidates may be used as additional candidates beyond the default search areas. The same or similar concept of using merge BV candidates in ITMP may be extended to other prediction modes, such as DIMD, TIMD, and/or SGPM.

In addition to IBC and ITMP modes, block-vector-based prediction may be used in combination with directional prediction. In some examples, block-vector-based prediction may be used with SGPM and/or with DIMD. In both modes, the merge candidates (e.g., adjacent and non-adjacent) may be evaluated with the template cost to select at least one BV predictor to be combined with the directional modes. Adjacent and non-adjacent blocks used to fetch merge candidates may be, for example, the same as in ITMP.

When DIMD is applied, additional intra modes (e.g., up to five intra modes) may be derived from the reconstructed neighbor samples. The (e.g., five) predictors may be combined with the non-directional predictor (e.g., planar or BV based predictor), for example, with the weights derived from the histogram of gradients. In some examples, the block vectors of (e.g., all) adjacent and non-adjacent merge candidates (e.g., merge candidates as described herein) may be compared to planar prediction on the reconstructed template. The template cost (e.g., SATD) may be used to select the best predictor among the block vectors.

SATD between the prediction and reconstruction samples of the template may be calculated for each intra prediction mode in the most-probable-mode list, e.g., as well as for the wide-angle modes if the above-right and/or bottom-left reference samples are available. The first two intra prediction modes with the minimum SATD and one non-angular intra prediction mode (e.g., DC or Planar) with the lowest SATD cost may be selected as the TIMD modes. In some examples, TIMD may (e.g., further) benefit from block vector prediction, e.g., in the same or similar manner as SGPM and DIMD modes. For example, any of the (e.g., three) fusion modes of TIMD may be replaced by a block-vector-based prediction, where BV may be selected from the merge candidates based on the template cost.

The merge candidates of ITMP may be (e.g., further) expanded with the process of auto-relocated block vector prediction. The additional AR-BVP candidates may or may not be used for DIMD and TIMD. For example, AR-BVP candidates may (e.g., also) be used for TIMD and DIMD mode with block vectors.

In some examples (e.g., Combined Intra-Inter Prediction (CIIP) extension with Intra Template Matching), an extension to CIIP may replace the inter-prediction part by the BV, which may enable CIIP with intra prediction only, allowing CIIP in I-slices. The CIIP mode may combine regular intra prediction, e.g., angular intra modes, with a BV-based prediction. CIIP is a coding tool (e.g., used in ECM) that traces back to VTM. In CIIP mode, inter and intra predictions may be combined by predefined weights that depend on the prediction type of the neighboring blocks. CIIP may be applied (e.g., only) to non-I slices, for example, since CIIP requires inter prediction. CIIP may be re-used and extended with intra only prediction. That is, the inter-part may be replaced by a similar intra prediction process, such as BV-based prediction, which may expand the use of CIIP and provide a coding gain to intra slices as well as to intra coded blocks. For example, multiple BV candidates from ITMP may be considered. An index may be signaled to the decoder to indicate which candidate is used. In some examples, a fusion of multiple candidates may be implemented. A mode (e.g., named spatial CIIP or Intra CIIP) may be signaled, for example, inside the intra prediction syntax. The mode may use the same functionality as CIIP, for example, except that the inter part may be replaced by BV-based prediction. That is, the intra part may remain unchanged, e.g., and the computation of weights may remain unchanged.

Intra CIIP may employ the CIIP process for intra-coded CU's. CIIP may be an inter prediction mode, where the motion compensated prediction may be blended with intra prediction. The TIMD derivation method may be used to derive the intra prediction mode.

In some examples, intra CIIP may be an independent intra mode and signaled at CU level. In some examples, intra CIIP may be an additional mode of ITMP. For example, a syntax element (e.g., named IntraCiipFlag) may be signaled as a submode of ITMP. Intra CIIP may be allowed, for example, (e.g., only) if/when ITMP fusion, ITMP filtering, and ITMP subpel are not applied. Intra CIIP may be a submode of ITMP, e.g., different from ITMP fusion. Intra CIIP may be used, for example, (e.g., only) if/when ITMP fusion is not used.

ITMP fusion may be implemented. A final prediction may be created, for example, by using and fusing together multiple (e.g., several) BVs. Prediction may be created, for example, as a combination of the prediction blocks defined by the at least two block vectors. ITMP fusion may consider fusions using at least two predictors.

In ITMP fusion, multiple (e.g., several) reference blocks may be blended together to derive a final prediction block. The reference blocks (e.g., also known as predictors) may be obtained, for example, by block vectors in template matching search process.

ITMP fusion may be a subset of ITMP mode. For example, an ITMP flag (e.g., intra_tmp_fiag) value (e.g., true) may signal a fusion flag to decide if fusion is applied or not.

The flag intra_tmp_fusion_flag may indicate whether fusion is used or not for the current block.

The index intra_tmp_fusion_idx may specify the candidate set used for ITMP fusion. The range of intra_tmp_fusion_idx may be, for example, zero (0) to two (2). The index intra_tmp_fusion_idx may be used to indicate one of the (e.g., three) candidate sets, e.g., {BV0 to BV4}, {BV5 to BV9}, {BV10 to BV14}.

The weight type intra_tmp_fusion_weight_type may indicate whether the SAD based weight derivation method or the Wiener-filter based weight derivation method is used.

In some examples, the SAD-based thresholds may be used (e.g., for each fusion set) to discriminate whether the blocks are combined or not in the fusion set. An ITMP fusion method may make, for example, multiple (e.g., three (3)) fusion sets with the final (e.g., 19) BVs. Each set may (e.g., initially) have a portion of BVs (e.g., five (5) BVs). The SAD-based thresholds may be used (e.g., for each fusion set) to discriminate whether the block indicated by a BV will be used or not. The threshold of each of three fusion sets may be calculated, for example, in accordance with Eqs. (3), (4), and (5) as follows:

$$\text{Fusion set 0: } Threshold_{set0} = SAD_{BV0} \ll 1 \qquad (3)$$

$$\text{Fusion set 1: } Threshold_{set1} = SAD_{BV5} * 1.2 \qquad (4)$$

$$\text{Fusion set 2: } Threshold_{set2} = SAD_{BV10} * 1.2 \qquad (5)$$

BVs within each set may be compared with the appropriate threshold. A BV may not be retained for fusion, for example, if the TM cost of a BV is larger than the threshold.

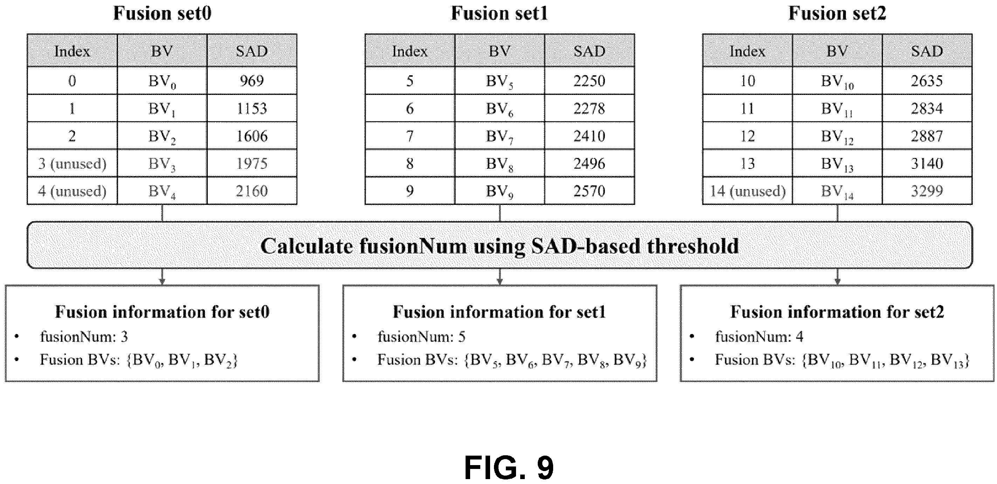

Fig. 9 illustrates an example of block vector filtering in ITMP fusion.

BV refinement may be implemented. There may be multiple (e.g., several) types of BVs used in ITMP, e.g., spatial sparse candidates, merge candidates, AR-BVP candidates, and/or HMVP candidates. Each of the BV types may have different refinement window size. Refinement may be implemented in ITMP.

Spatial candidates may be tested within the sparse search, e.g., candidates coming from one of the search regions indicated in FIG. 4. A sparse candidate selected for refinement (e.g., in ITMP mode) may be associated with a refinement window size. For example, a refinement window size for sparse candidates may be $\pm \frac{SI}{2^i}$, where $SI$ may be a subsampling factor. For example, $SI$ may be equal to three (3) in some examples. Consequently, sparse candidates may have a 3x3 refinement window size. In some examples, subsampling factor $SI$ may be equal to four (4), e.g., indicating a refinement window size of 4x4.

In some implementations, a refinement process of merge candidates may be different than for candidates that come from the native sparse search. For example, an 11x11 refinement window size may be used if a merge BV candidate is selected for refinement.

In some examples, a refinement process may be performed for the best (e.g., 30) candidates selected by using template matching cost. Different refinement may be implemented for candidates coming from sparse search (e.g., as in native ITMP) and/or for candidates coming from merge candidates. For example, refinement may include (e.g., first) using 3x3 refinement and (e.g., second) using 11x11 refinement around the candidate.

For example, an AR-BVP candidate selected for refinement may have a refinement range of 3x3.

In some examples, BV candidates coming from the HMVP list may use the same refinement as merge candidates, e.g., 11x11 refinement window size. In some implementations, an HMVP candidates' refinement window size may be decoupled from other BV candidates, e.g., if a BV candidate from the HMVP list is used in refinement, then a refinement window may be defined separately from other candidates. For example, a BV drawn from HMVP candidates may use a 3x3 window size in a refinement operation.

In some examples, different refinement strategies may be used. For example, a relaxed refinement strategy may be implemented, where a first (e.g., 3x3) refinement process may be used if the merge candidate is within the ITMP search region (e.g., one of the regions illustrated in FIG. 4) and a second (e.g., 11x11) refinement process may be used if the merge candidate is located outside the ITMP search region.

In some examples, merge candidates coming from IBC block may use a first (e.g., 11x11) refinement, and merge candidates coming from other neighboring blocks may use a second (e.g., 3x3) refinement, regardless of their position relative to the ITMP search region.

As previously mentioned, 3x3 and 11x11 search window sizes are used as examples. The refinement sizes may vary in a wide variety of implementations.

Merging/clustering of BV candidates may enlarge refinement window size. Merging may occur, for example, as explained herein. Use of merging of candidates and their refinement windows may result in refinement window sizes going beyond the larger window size (e.g., beyond a 11x11 window size). In some examples, the window size may become much larger than the initial refinement size for individual candidates.

In some examples, dense search may be applied within a refinement process. Dense search may mean that each candidate within a refinement window is tested. Dense search may be too complex for the computational capabilities/requirements of some encoders/decoders.

The number of BVs added as additional ITMP candidates may vary in a wide variety of implementations.

Zero or more (e.g., several) types of additional candidates may be added in an ITMP BV search process. The additional candidates may include regular merge candidates fetched from neighboring blocks, AR-BVP candidates, and/or BV candidates from HMVP list.

In some examples, there may be up to 25 BVs stored in an HMVP list and one or more (e.g., all) of the BVs may be used as candidates in an ITMP search process.

In some implementations, up to 20 AR-BVP candidates and/or up to 5 AR-BVP candidates based on sparse candidates may be added. The numbers (e.g., up to 20, up to 5) may vary among implementations. A decision to limit the number of AR-BVP candidates may be an implementation decision, e.g., to limit complexity.

Regular merge candidates may be added from local (e.g., adjacent) and non-local (e.g., non-adjacent) blocks. Merge BVs may be collected from local and non-local blocks coded in IBC or ITMP mode. However, it may be beneficial to generate BV merge candidates from (e.g., all) the spatial blocks that include BVs. For example, BV-based prediction may be used in one or more (e.g., several) modes in coding software. Merge candidates may include BVs from DIMD, TIMD, and/or SGPM when constructing merge BV candidates. In some examples, BVs from DIMD, TIMD, and/or SGPM may be included when constructing AR-BVP candidates. In some examples, BVs from SGPM blocks may be included in SGPM candidates.

If a block includes one BV or multiple BVs (e.g., depending on a mode), the one or multiple BVs may be added to the merge candidates. In some examples, a (e.g., one) block may contribute up to three (3) BVs (e.g., in case of TIMD up to three (3) BVs may be used and stored for future referencing). In some examples, IBC mode may contribute up to two (2) BVs (e.g., in case of bi-IBC), ITMP may contribute up to two (2) BVs (e.g., in case best-by-cost is not the same as the selected BV), DIMD may contribute (e.g., only) one (1) BV, and SGPM may contribute up to two (2) BVs.

In some examples, there may be a limit on the total number of local blocks (e.g., up to five (5) local blocks) that may be checked/tested. In some examples, each block may contribute up to three (3) BVs, which may result in 15 BVs (e.g., at most 15 BVs) being added from local blocks.

In some examples, more adjacent blocks may be used when constructing ITMP merge candidates. For example, (e.g., up to 13) adjacent blocks may be used when constructing ITMP merge candidates. A similar approach is used in occurrence-based intra coding (OBIC) mode. For example, using this approach, e.g. as in OBIC, at most 39 BVs may be added from local blocks.

In some examples, there may be non-local ITMP merge candidates. For example, (e.g., 18) non-local positions/-

blocks may be tested/checked to fetch BVs. In some examples, each block may contribute up to three (3) BVs, which may result in at most 54 BVs being added to ITMP merge candidates from non-local block positions.

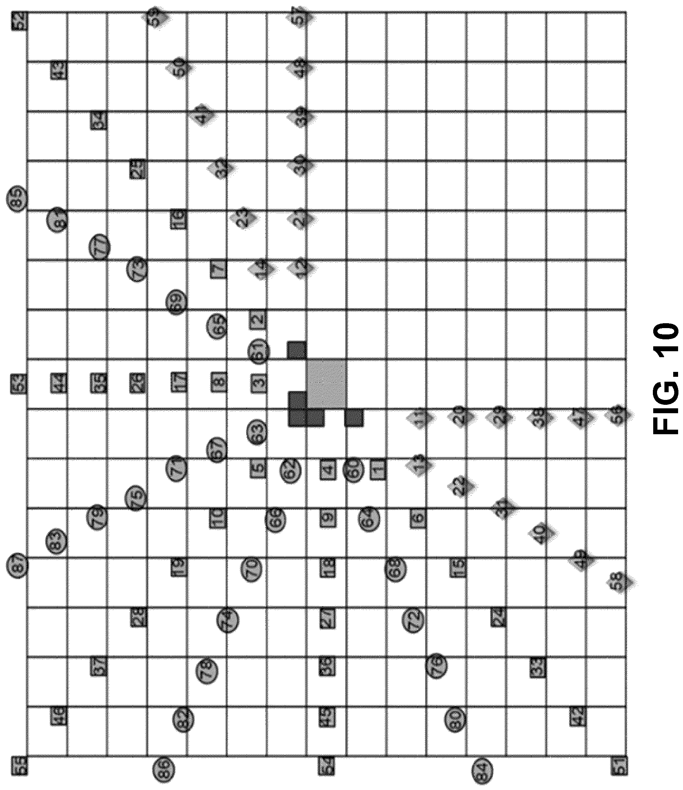

In some examples, a larger distance may be used when constructing non-adjacent candidates. The distance for non-adjacent spatial merge candidates may be increased, for example, from four (4) to seven (7), as shown by example in FIG. 10. For example, up to seven (7) rows/columns of spatial neighboring blocks (e.g., in terms of the CU height/width) of the current CU may be used in ITMP merge BV candidate construction. By increasing non-adjacent distance level to seven (7), up to 87 blocks may be checked in ITMP merge candidates' construction. In some examples, e.g. when non-adjacent distance level is seven (7), up to 261 BVs may be added to the ITMP merge candidates.

Fig. 10 illustrates an example of adjacent and non-adjacent spatial merge candidates.

A refinement operation may be too complex, for example, if/when using large refinement window size (e.g., the term "refinement window" may be used interchangeably herein with the term "refinement area") and a dense search. In some systems, a refinement window size may be unchangeable once defined for a (e.g., certain) BV type. The refinement window size may be predefined and used as-is within an encoding/decoding process (e.g., a fixed refinement window size may be used throughout encoding and decoding process). A fixed refinement window size may not be optimal in terms of using available computational resources. Adjusting the refinement window size may better reflect coding conditions.

The number of additional candidates being tested (e.g., in addition to candidates tested in the regular/native ITMP sparse search process) may become large, imposing additional complexity that can become a burden on the codec.

As described herein, a sparse/optimized BV refinement approach may be used to tackle (e.g., reduce) the complexity of the BV search process.

A criteria may be imposed for the addition of BVs, for example, instead of adding a BV to the BV candidates (e.g., BV candidate list) if the same BV does not already exist within BV candidates (e.g., within the BV candidate list). For example, a distance based criteria may be imposed (e.g., when constructing the ITMP merge candidates or AR-BVP candidates) to limit the number of added BVs while preserving the diversity of BVs.

The number of neighboring PUs tested for a BV may be adaptively chosen. For example, local and/or non-local PU positions may be adaptively selected. For example, the non-adjacent distance (NA-distance) level used to fetch non-adjacent (non-local) spatial BV candidates may be selected based on a criterion. In some examples, the distance for non-adjacent spatial merge candidates may be increased (e.g., to seven (7)). An increase in the distance (e.g., for non-adjacent spatial merge candidates) may not be optimal (e.g., in terms of gain relative to the used computing resources). For example, the distance may be adjusted based on the resolution, block size, Qp, etc.

Refinement window size may be adaptively selected. Adaptive selection may be performed based on one or more criteria, such as resolution of a sequence, block size (e.g. CU/PU size), Qp, the distance of local and/or non-local blocks that may be used to fetch BV candidates, etc.

The total number of added BVs may be conditioned/controlled, e.g., adaptively chosen, based on, for example, resolution or other criteria. The number of additional BVs may be adaptively chosen, for example, regardless of the number of neighboring blocks that are tested for BV. The number of HMVP candidates that may be used as ITMP candidates may be adaptively chosen. The number of merge candidates, AR-BVP candidates, and/or HMVP candidates may be selected adaptively.

The total number of BVs selected for refinement may be adaptively chosen.

Sparse/optimized BV refinement may be performed. Sparse refinement may be performed within a refinement window (e.g., a refinement area), for example, instead of testing each BV/position within the refinement window. Sparse BV refinement (e.g., a first refinement operation) may be followed by a second refinement operation around the best candidates from the sparse refinement operation.

In some examples, after the first sparse refinement operation is finished, at least one BV may be additionally refined. For example, positions around N best BVs from the first sparse refinement operation may be refined in the second refinement operation.

Many variants may be implemented where the number of tested candidates within the refinement window may be less than the number of candidates if dense refinement were performed.

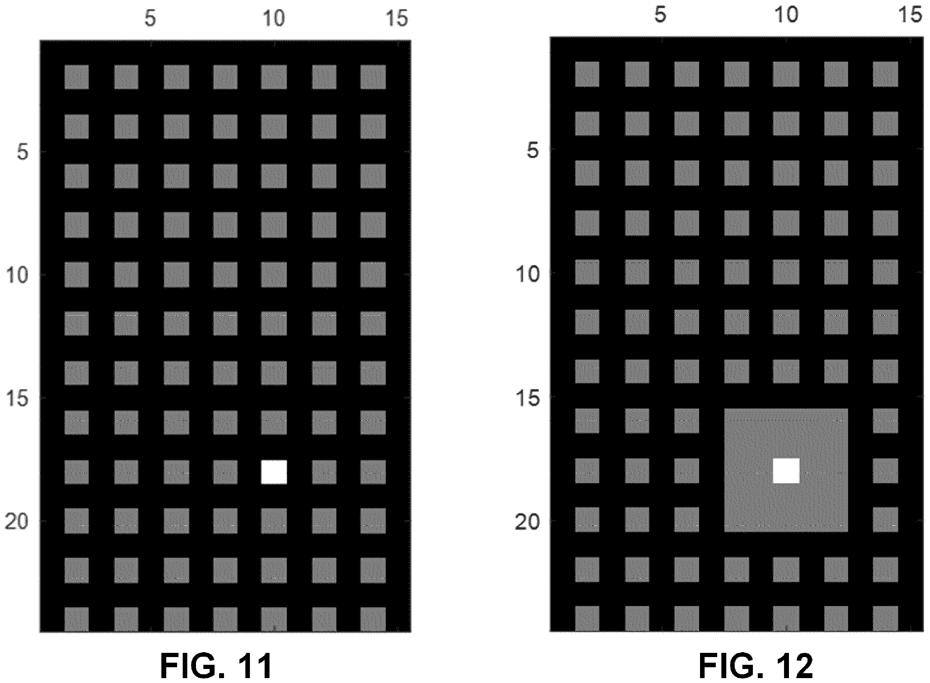

In some examples, every m-th row and n-th column may be tested in sparse refinement. As illustrated by example in FIG. 11, m=2 and n=2 may mean that every second row and every second column are tested. The white square shown in FIG. 11 may be a position of the current BV. Gray squares may represent BV positions that are tested within refinement. In the example shown in FIG. 11, the refinement window size may be 24x15, which may be the result of merging/clustering BV candidates.

Fig. 11 illustrates an example of sparse refinement.

An example of pseudocode for the example illustrated in FIG. 11 may be as follows:

```
xDiff = Current_BV_x - BV_x
yDiff = Current_BV_y - BV_y
  if (xDiff%m != 0 □ yDiff%n != 0)
    do not test candidate BV;
```

```
else
  test candidate BV;
end
```

In some examples, a Current_BV may be a candidate that is selected for refinement. A BV is a candidate to be tested within the refinement process. The position may be given with x and y coordinates of a vector. Difference parameters yDiff and xDiff may indicate the vertical and horizontal difference between the Current_BV and a BV that is tested. The differences may represent position of a tested candidate (BV) relative to the Current_BV position. A modulo computation is a mathematical operation that calculates the remainder when a number is divided by another number. A modulus operator may be represented by the symbol "%." The operator "!=" may represent a logical comparison result "not equal to."

A test may be performed to determine if modulo m of xDiff or modulo n of yDiff is different than zero (e.g., not equal to zero). A BV candidate may not be tested in the refinement, for example, if modulo m or modulo n is not zero. Otherwise, the BV candidate may be tested within the refinement.

The values of modulo m and modulo n may take a variety of values in various embodiments. The values of m and n may or may not be equal in various implementations.

In some examples, candidates that are close to the current BV may be tested within the refinement without skipping. For example, another smaller window within the refinement window may be defined. Candidates (e.g., all candidates) within the smaller window may be tested in refinement. Sparse refinement may be performed outside the smaller window. An example is illustrated in FIG. 12. As shown in FIG. 12, a 5x5 window around the current BV may be defined. The candidates (e.g., all candidates) within the 5x5 window may be tested. Outside the 5x5 window, every second row and every second column may be tested.

Fig. 12 illustrates an example of sparse refinement with a smaller window (e.g., 5x5 window) defined inside a larger refinement window.

An example of pseudocode for the example illustrated in FIG. 12 may be as follows:

```
xDiff = Current_BV_x - BV_x
yDiff = Current_BV_y - BV_y
if (abs(xDiff)>i □ abs(yDiff)>j)
   if (xDiff%m != 0 □ yDiff%n != 0)
     do not test candidate BV;
   else
     test candidate BV;
   end
else
  test candidate BV;
end
```

With reference to the pseudocode, i and j may define the smaller window size. For example (e.g., as illustrated in FIG. 12), i=2 and j=2.

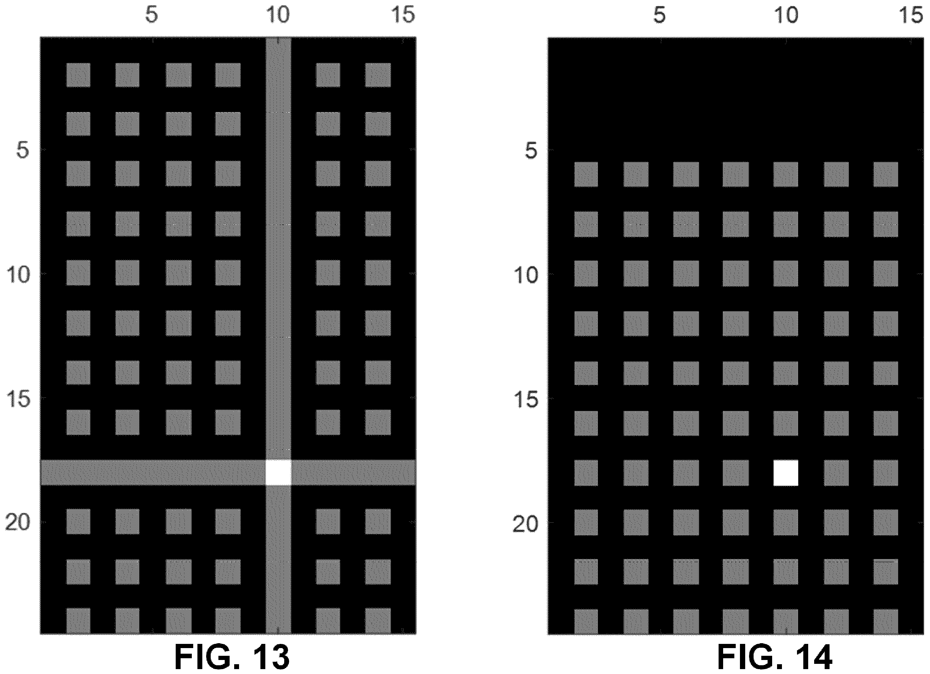

In some examples, positions (e.g., all positions) with one coordinate equal to the current BV coordinate may be tested. An example is illustrated in FIG. 13.

Fig. 13 illustrates an example of sparse refinement.

An example of pseudocode for the example illustrated in FIG. 13 may be as follows:

```
xDiff = Current_BV_x - BV_x
yDiff = Current_BV_y - BV_y
if (abs(xDiff)>i && abs(yDiff)>j)
   if (xDiff%m != 0 □ yDiff%n != 0)
     do not test candidate BV;
   else
```

test candidate BV; end else test candidate BV; end

With reference to the pseudocode, i and j may define line width. For example (e.g., as illustrated in FIG. 13), i=0 and j=0.

In some examples, positions of a tested BV relative to the current BV may be tested and compared with a threshold. For example, xDiff and yDiff may be compared with a threshold. BV candidates may not be tested, for example, if at least one of xDiff and yDiff is larger than a threshold. Otherwise, a BV candidate may be tested within refinement. For example, as illustrated in FIG. 14, distant candidates at the top of the refinement window may not be tested. For example, a distant candidate relative to the Current_BV may not be tested within refinement.

Fig. 14 illustrates an example of sparse refinement where distant BV candidates may not be tested.

Many different variants/examples may be defined/implemented in sparse refinement. Different combinations of sparse refinement variants (e.g., as described herein) may be defined/implemented.

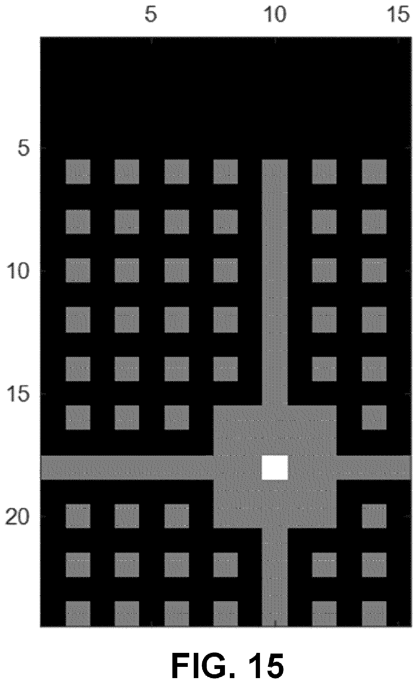

In some examples, a combination of variants/examples (e.g., as described herein) may be implemented. In an example combination, every second row and every second column may be tested, a smaller (e.g., 5x5) window may be implemented where (e.g., all) candidates within the smaller window may be tested, (e.g., all) candidates at the same vertical and horizontal positions as the current candidate may be tested, and distant candidates may not be tested. An example of combining sparse refinement examples is illustrated in FIG. 15.

Fig. 15 illustrates an example of sparse refinement that combines several approaches (e.g., as described herein).

In some examples, a second refinement operation may be defined/performed. After performing (e.g., a first or intermediate) sparse refinement, N best candidates (e.g., in terms of TM cost) may be used to perform a second refinement. A second (e.g., or final) refinement may be performed around N best candidates from the first refinement. For example, a 3x3 refinement may be performed in the second refinement.

In some examples, N candidates (e.g., the N best candidates) may be pruned. A candidate (e.g., one of the best N candidates) may not be used within a second refinement, for example, if the candidate is within the smaller window, e.g., within 5x5 window as illustrated in FIG. 12. The candidate may be replaced with the next best candidate, for example, until N candidates are selected for the second refinement.

In some examples, the N best candidates may be adaptively chosen for the second refinement. Adaptation may be based on the refinement window size. For example, if the refinement window is small, one, e.g., N=1, BV candidate may be used for the second refinement. As the refinement window size increases, the number of candidates for the second refinement step may increase. For example, N may be equal to two (2) for medium size refinement window sizes. For example, N may be equal to three (3) for larger refinement window sizes.

In examples, w and h may define, respectively, width and height of the refinement window. Adaptation may be performed, for example, as follows:

```
If h<7 or w<7
    N=1
else if h<13 or w<13
    N=2
else
    N=3
```

In some examples, a sparse/optimized refinement process may be used if a refinement window size is larger than a threshold. Optimized refinement may be used for larger refinement window sizes. Sparse/optimized refinement may be used, for example, if at least one dimension of the refinement window size is larger than a threshold.

Distance based filtering may be performed. In some examples (e.g., when fetching and/or when creating a BV candidate, such as an ITMP merge and/or AR-BVP candidate), the BV usage may be conditioned based on the distance relative to already existing candidates.

For example, a BV may (e.g., first) be tested to determine if the same BV already exists within the already added/created candidates. The BV may then be used, e.g., added to the list of ITMP merge and/or AR-BVP candidates, for example, (e.g., only) if the same BV candidate does not already exist.

In some examples, a BV may be tested differently before it is potentially used, e.g., added to the list, e.g., as an ITMP merge and/or AR-BVP candidate. For example, a test may be performed to compare the distance(s) of the BV from other, already added, BV candidate(s) against a threshold. The vector may not be used, for example, if the distance is less than or equal to the threshold. Otherwise (e.g., if the distance is larger than the threshold), the BV may be used (e.g., added to the list of BV candidates).

Comparison of distances with a threshold may be made individually for x and for y coordinates of a vector. For example, Curr_BV may be the BV currently being fetched or created. BV[i] may be the i-th existing BV candidate, e.g., already added to the list of BV candidates. Comparison may be made with (e.g., all) BV candidates from the list, e.g., with all already existing BV candidates.

A Curr_BV may be used, e.g., may be added to the list of BV candidates, for example, if abs(Curr_BV_x - BV_x) >TR or abs(Curr_BV_y - BV_y)>TR (e.g., at least one), where TR may be threshold and abs may be an absolute value operator. Otherwise, the vector may not be added to the list.

In some examples, comparison may be terminated early. For example, it may be sufficient to find at least one existing candidate where abs(Curr_BV_x - BV_x)<=TR and abs(Curr_BV_y - BV_y)<=TR to decide not to use the Curr_BV in the list of BV candidates to be tested.

Non-adjacent distance (NA-Distance) levels may be adaptively selected.

The complexity of a BV search process may be reduced, for example, by better defining neighboring blocks that may be used to fetch/create BVs. Using the same NA-Distance level across different coding conditions and across different sequences may not be the best approach, e.g., in terms of utilizing available computational resources.

In some examples, the NA-distance level that defines the distance of neighboring (e.g., non-adjacent) blocks that may be used to fetch BV candidates may be adaptively selected.

For example, a non-adjacent distance level may be selected based on the sequence resolution, block size, and/or quantization parameter.

In some examples, an NA-distance may be adaptively selected based on resolution, e.g., resolution-adaptive NA-distance level.

For example, an NA-Distance may be equal to M up to HD resolution; the NA-Distance may be equal to N up to UHD resolution; and/or the NA-Distance may be equal to L above UHD resolution. The values of M, N, and L may define different NA-distance levels. An example formulation for adaptive selection of the NA-distance level based on the resolution may be as follows:

```
PicSizeInLumaSamples = PicHeightlnLumaSamples * PicWidthlnLumaSamples
if PicSizeInLumaSamples <= (1920 * 1080)
        NA-distance level is M
else if PicSizeInLumaSamples <= (3840 * 2160)
        NA-distance level is N
else
        NA-distance level is L
```

In some examples, an NA-distance-level may be adaptively chosen based on the current block size. For example, an NA-distance level may be chosen based on the height (h) and width (w) of the current block. An example adaptation may be as follows:

```
If h<8 or w<8
    NA-distance level is M
else if h<32 or w<32
    NA-distance level is N
else
    NA-distance level is L
```

In some examples, adaptation based on the block size may be performed as follows:

```
If h*w<64
    NA-distance level is M
else if h*w<256
    NA-distance level is N
else
    NA-distance level is L
```

Different variants/examples that utilize width and height of the current block (e.g., current block size) may be used in a wide variety of implementations.

In some examples, Qp may be used to adaptively select NA-distance level. An example implementation may be as follows:

```
If Qp<17
    NA-distance level is M
else if Qp<32
    NA-distance level is N
else
    NA-distance level is L
```

Aa refinement window size may be adaptively selected.

Complexity of a BV search process may be reduced, for example, by adaptively defining a refinement window size. Using one, fixed, refinement window size across many different sequences and coding conditions may not be the best approach. Hence, an adaptive refinement window may improve performance.

Different BV types may use different refinement window sizes. In some examples, BV candidates may have different refinement window sizes depending on their position relative to an ITMP search region. For example, if a BV is inside an ITMP search region, one refinement window size may be used, and if the BV is outside the ITMP search region, another refinement window size may be used.

Additional or alternative adaptation of refinement window sizes may be implemented. For example, there may be additional or alternative criteria on how to select refinement window sizes (e.g., adaptively).

In some examples, refinement window size may depend on the current block size. An example of adaptively selecting refinement window sizes based on current block size may be implemented as follows:

```
If h<8 or w<8
    Refinement window size is MxM
else if h<32 or w<32
    Refinement window size is NxN
else
    Refinement window size is LxL
```

Another example of adaptively selecting refinement window sizes based on current block size may be implemented as follows:

```
If h*w<64
    Refinement window size is MxM
else if h*w<256
    Refinement window size is NxN
else
    Refinement window size is LxL
```

In some examples, a refinement window size may depend on the resolution of the picture. Adaptation may be performed similarly as for NA-distance level adaptation based on the resolution. For example, a refinement window size may be equal to MxM up to HD resolution; the refinement window size may be equal to NxN up to UHD resolution; and/or the refinement window size may be equal to LxL above UHD resolution. The values of M, N, and L may define different refinement window sizes. An example of adaptively selecting refinement window size based on picture resolution may be as follows:

```
PicSizeInLumaSamples = PicHeightlnLumaSamples * PicWidthlnLumaSamples
if PicSizeInLumaSamples <= (1920 * 1080)
        refinement window size is MxM
else if PicSizeInLumaSamples <= (3840 * 2160)
        refinement window size is NxN
else
        refinement window size is LxL
```

In some examples, a refinement window size may depend on the block position from which the BV is fetched from. One refinement size, e.g., MxM, may be used, for example, if a BV is coming from the local (e.g., adjacent) block, and another refinement window size, e.g., NxN, may be used if the BV comes from a non-local (e.g., non-adjacent) block.

In some examples, a refinement window size may be adaptively changed as the distance of the block from which the BV is fetched from changes (e.g., increases). For example, local (e.g., adjacent) blocks, or (e.g., more precisely) BVs fetched from adjacent blocks, may use MxM refinement size. When fetching BVs from non-adjacent blocks, a refinement window size may change (e.g., increase or decrease) as the distance of the non-adjacent block changes (e.g., increases). For example, a refinement window size may be changed by a factor (e.g., increased or decreased) as the process of fetching BVs moves from one NA-distance level to another. An adaptive refinement window size may be determined, for example, in accordance with Eq. (6):

$$\text{Refinement\_window\_size} = (M+NA\_distance\_Current * a \text{ x } M+NA\_distance\_Current * a) \qquad (6)$$

With reference to Eq. (6), NA_distance_Current may be the non-adjacent distance level of the current block that is tested for a BV (e.g., from which BV is currently fetched from), and "a" may be the factor that defines change of refinement window size. For example, "a" may be equal to two (2), in which case the refinement window size may increase as the distance of the non-adjacent blocks increases. In some examples, "a" may be equal to -2, in which case the refinement window size may decrease as the distance of the non-adjacent blocks increases.

In some examples, an adaptive refinement window size may be determined in accordance with Eq. (7):

$$\text{Refinement\_window\_size} = (M+(NA\_distance\_Current+1) * a \text{ x } M+(NA\_distance\_Current+1) * a) \quad (7)$$

For example, an initial refinement window size may be 5x5, which may be used for BVs coming from local neighboring blocks. With reference to Eq. (7), a=2 in the example. Neighboring non-adjacent blocks may be tested for a BV. Blocks at the distance level equal to zero (0) may (e.g., first) be tested for a BV. If a BV is found within those blocks, its refinement window may be modified, for example, to a 7x7 refinement window size. Non-adjacent blocks with a distance level equal to one (1) may be checked for a BV. If BV is found within those blocks, its refinement window size may be modified, for example, to a 9x9 refinement window size. The process may continue until all allowed blocks are tested.

In some examples, a refinement window size may be adapted based on the Qp.

The total number of BV candidates may be adaptively selected.

Additional complexity may become a burden on the codec if the number of additional candidates being tested (e.g., in addition to candidates tested in the regular/native ITMP sparse search process) becomes large.

The complexity of BV search process may be limited, for example, by limiting the number of BV candidates added in the search process. For example, candidates may be based on their position relative to the ITMP search region and/or candidates outside ITMP search region may be prioritized. A selected number of candidates (e.g., only N out of M candidates) may be used. In some examples, a subset of candidates (e.g., a subset of 25 HMVP candidates) may be used, e.g., in an ITMP search process. The number of AR-BVP candidates may (e.g., also) be capped (e.g., to a certain number) to limit added complexity.

However, a limitation with a predetermined number of candidates may not adapt to the sequence or coding conditions. The predetermined number may be chosen offline, prior to the encoding, and fixed within a codec implementation.

The total number of BV candidates used within a BV search process may be adapted, e.g., limited. Adaptive selection of the total number of BV candidates may be performed, for example, based on the sequence resolution, current block size, Qp, and/or any other coding parameter or other coding conditions.

The total number of BVs may be selected adaptively, for example, by performing adaptation for one or more (e.g., all) BV candidates regardless of their type, e.g., ITMP merge candidates from neighboring blocks, HMVP candidates, AR-BVP candidates, etc. Adaptation may be performed for each one of the BV types individually. For example, the total number of BVs may be adaptively selected for each of the BV types. In some examples, adaptation may be performed for multiple (e.g., all) BV types jointly. For example, the total number of BVs may be decided and applied after collecting all BVs that may be used within the BV search process.

In some examples, the total number of BVs that may be used within the BV search process may be decided based on sequence resolution.

In some examples, the total number of BVs that may be used within the BV search process may be decided based on the current blocks size.

In some examples, the total number of BVs that may be used within the BV search process may be decided based on the Qp.

In some examples, early stopping of a BV collection/creation process may occur if the number of already collected BVs reaches the total number of BVs (e.g., determined as described herein).

BV candidates for the refinement may be adaptively selected.

In some examples of an ITMP search process, 30 candidates may be used in the refinement. The number of candidates may be hardcoded and may not change, e.g., neither adapted based on sequence or based on coding condition.

Similar to other examples described herein, the number of candidates that may be used in the refinement process may be adaptively selected, for example, based on the sequence resolution, current block size, Qp, and/or based on any other coding parameter or other coding conditions.

A video coding device such as a video decoder or a video encoder may configured to obtain a plurality of candidate block vectors (BVs) for a current video block, and determine a refinement area associated with a current BV from the plurality of candidate BVs, wherein the refinement area may define a plurality of BV refinement candidates. The video coding device may determine, for only a subset of the BV refinement candidates defined by the refinement area, respective costs (e.g., template matching costs) associated with the subset of BV refinement candidates. The video coding device may select one or more BV refinement candidates from the subset of BV refinement candidates based at least on the determined costs, and add the one or more selected BV refinement candidates to a candidate BV list for the current video block.

In examples, the refinement area may define multiple rows and multiple columns of pixel positions. Each of the pixel positions may be associated with a respective BV refinement candidate, and the video coding device may skip a cost analysis for the BV refinement candidates associated with at least one row or one column of the pixel positions. In examples, the video coding device may select, based on the costs associated with the subset of BV refinement candidates, a preliminary BV refinement candidate from the subset of BV refinement candidates. The video coding device may determine a search area surrounding the preliminary BV refinement candidate, wherein the search area may be smaller than the refinement area and may define one or more additional BV refinement candidates that are in the proximity of the preliminary BV refinement candidate. The video coding device may select a BV refinement candidate to add to the candidate BV list by applying a further cost analysis to the one or more of the BV refinement candidates defined by the search area. The search area may comprise multiple pixel positions each of which may correspond to a respective BV refinement candidate, and the further cost analysis may be applied to the respective BV refinement candidate associated with every pixel position in the search area. The video coding device may add the selected refinement BV candidate(s) from the search area to the candidate BV list for the current video block.

In examples, the video coding device may determine a search area surrounding the current BV that defines one or more of BV refinement candidates in the proximity of the current BV, wherein the search area may be smaller than the refine window and may comprise multiple pixel positions each of which may correspond to a respective BV refinement candidate. The video coding device may select a BV refinement candidate to add to the candidate BV list by applying a cost analysis to the respective BV refinement candidate associated with every pixel position in the search area.

In examples, the video coding device may determine a first candidate BV, calculate a distance between the first candidate BV and a second candidate BV, and exclude the first candidate BV from the plurality of candidate BV in response to determining that a distance between the first candidate BV and the second candidate BV is smaller than a threshold value. In examples, the first of BV and the second BV may be determined for intra template matching prediction.

In examples, the video coding device may adaptively determine a search distance from the current video block, wherein the search distance may identify a neighboring video block and be determined based on at least one of a resolution of the current video block, a size of the current video block, or a quantization parameter associated with the current video block. The video coding device may determine a candidate BV associated with the neighboring block, and include the determined candidate BV in the plurality of BVs for the current video block.

In examples, the video coding device may adaptively determine a size of the refinement area based on at least one of a resolution of the current video block, a size of the current video block, a distance between a neighboring video block associated with current BV and the current video block, or a quantization parameter associated with the current video block.

In examples, the video coding device may determine the number of candidate BV to include in the plurality of candidate BVs based on at least one of a resolution of the current video block, a size of the current video block, or a quantization parameter associated with the current video block.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. Video data (e.g., a bitstream) that may include one or more of the described syntax elements, or variations thereof, whether transmitted, stored, or otherwise made available.

    iii. Creating, transmitting, receiving, and/or decoding of the bitstream.

    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video decoding device, comprising:
a processor configured to:

   obtain a plurality of candidate block vectors (BVs) for a current video block;
   determine a refinement area associated with a current BV from the plurality of candidate BVs, wherein the refinement area defines a plurality of BV refinement candidates;
   determine, for only a subset of the BV refinement candidates defined by the refinement area, respective costs associated with the subset of BV refinement candidates;
   select one or more BV refinement candidates from the subset of BV refinement candidates based at least on the determined costs; and
   add the one or more selected BV refinement candidates to a candidate BV list for the current video block.

2. The video decoding device of claim 1, wherein the refinement area defines multiple rows and multiple columns of pixel positions, each of the pixel positions is associated with a respective BV refinement candidate, and a cost analysis is skipped for the BV refinement candidates associated with at least one row or one column of the pixel positions.

3. The video decoding device of claim 1, wherein the processor being configured to select the one or more BV refinement candidates based at least on the determined costs comprises the processor being configured to:

   select, based on the respective costs associated with the subset of BV refinement candidates, a preliminary BV refinement candidate from the subset of BV refinement candidates;
   determine a search area surrounding the preliminary BV refinement candidate, wherein the search area is smaller than the refinement area and defines one or more BV refinement candidates in the proximity of the preliminary BV refinement candidate; and
   select a BV refinement candidate to add to the candidate BV list by applying a cost analysis to the one or more BV refinement candidates defined by the search area.

4. The video decoding device of claim 3, wherein the search area comprises multiple pixel positions each of which corresponds to a respective BV refinement candidate, and wherein the cost analysis is applied to the respective BV refinement candidate associated with every pixel position in the search area.

5. The video decoding device of claim 1, wherein the processor being configured to select the one or more BV refinement candidates based at least on the determined costs comprises the processor being configured to:

   determine a search area surrounding the current BV that defines one or more BV refinement candidates in the proximity of the current BV, wherein the search area is smaller than the refinement window and comprises multiple pixel positions each of which corresponds to a respective BV refinement candidate; and
   select a BV refinement candidate to add to the candidate BV list by applying a cost analysis to the respective BV refinement candidate associated with every pixel position in the search area.

6. The video decoding device of claim 1, wherein the processor being configured to obtain the plurality of candidate BVs comprises the processor being configured to:

   determine a first candidate BV;
   calculate a distance between the first candidate BV and a second candidate BV; and
   exclude the first candidate BV from the plurality of candidate BV in response to determining that a distance between the first candidate BV and the second candidate BV is smaller than a threshold value.

7. The video decoding device of claim 6, wherein the first of BV and the second BV are determined for intra template matching prediction.

8. The video decoding device of claim 1, wherein the processor being configured to obtain the plurality of candidate BVs comprises the processor being configured to:

   adaptively determine a search distance from the current video block, wherein the search distance identifies a neighboring video block and is determined based on at least one of a resolution of the current video block, a size of the current video block, or a quantization parameter associated with the current video block;
   determine a candidate BV associated with the neighboring block; and
   include the determined candidate BV in the plurality of BVs for the current video block.

9. The video decoding device of claim 1, wherein the processor is configured to adaptively determine a size of the refinement area based on at least one of a resolution of the current video block, a size of the current video block, a distance between a neighboring video block associated with current BV and the current video block, or a quantization parameter associated with the current video block.

10. The video decoding device of claim 1, wherein the processor is configured to determine the number of candidate BV to include in the plurality of candidate BVs based on at least one of a resolution of the current video block, a size of the current video block, or a quantization parameter associated with the current video block.

11. A video decoding method, comprising:

    obtaining a plurality of candidate block vectors (BVs) for a current video block;
    determining a refinement area associated with a current BV from the plurality of candidate BVs, wherein the refinement area defines a plurality of BV refinement candidates;
    determining, for only a subset of the BV refinement candidates defined by the refinement area, respective costs associated with the subset of BV refinement candidates;
    selecting one or more BV refinement candidates from the subset of BV refinement candidates based at least on the determined costs; and
    adding the one or more selected BV refinement candidates to a candidate BV list for the current video block.

12. The video decoding method of claim 11, wherein the refinement area defines multiple rows and multiple columns of pixel positions, each of the pixel positions is associated with a respective BV refinement candidate, and a cost analysis is skipped for the BV refinement candidates associated with at least one row or one column of the pixel positions.

13. The video decoding method of claim 11, wherein selecting the one or more BV refinement candidates based at least on the determined costs comprises:

    selecting, based on the respective costs associated with the subset of BV refinement candidates, a preliminary BV refinement candidate from the subset of BV refinement candidates;
    determining a search area surrounding the preliminary BV refinement candidate, wherein the search area is smaller than the refinement area and defines one or more of the BV refinement candidates in the refinement area that are in the proximity of the preliminary BV refinement candidate; and
    selecting a BV refinement candidate to add to the candidate BV list by applying a cost analysis to the one or more of the BV refinement candidates defined by the search area.

14. The video decoding method of claim 13, wherein the search area comprises multiple pixel positions each of which corresponds to a respective BV refinement candidate, and wherein the cost analysis is applied to the respective BV refinement candidate associated with every pixel position in the search area.

15. The video decoding method of claim 11, wherein selecting the one or more BV refinement candidates based at least on the determined costs comprises:

    determining a search area surrounding the current BV that defines one or more BV refinement candidates in the proximity of the current BV, wherein the search area is smaller than the refine window and comprises multiple pixel positions each of which corresponds to a respective BV refinement candidate; and
    selecting a BV refinement candidate to add to the candidate BV list by applying a cost analysis to the respective BV refinement candidate associated with every pixel position in the search area.

**FIG. 1**

EP 4 765 815 A1

FIG. 2

EP 4 765 815 A1

FIG. 3

EP 4 765 815 A1

FIG. 4

Sparse search example     refinement search example

## FIG. 5

| ITMP PROCESS | | TM COST RANKING | | REFINEMENT PROCESS | | TM COST RANKING |
|---|---|---|---|---|---|---|
| STANDARD+MERGE candidates<br>Integer-pel TM only<br>30 candidates in refinement | → | 30 INTEGER candidates are selected | → | | → | 19 INTEGER candidates are selected |

## FIG. 6

FIG. 7

FIG. 8

**Fusion set0**

| Index | BV | SAD |
|---|---|---|
| 0 | $BV_0$ | 969 |
| 1 | $BV_1$ | 1153 |
| 2 | $BV_2$ | 1606 |
| 3 (unused) | $BV_3$ | 1975 |
| 4 (unused) | $BV_4$ | 2160 |

**Fusion set1**

| Index | BV | SAD |
|---|---|---|
| 5 | $BV_5$ | 2250 |
| 6 | $BV_6$ | 2278 |
| 7 | $BV_7$ | 2410 |
| 8 | $BV_8$ | 2496 |
| 9 | $BV_9$ | 2570 |

**Fusion set2**

| Index | BV | SAD |
|---|---|---|
| 10 | $BV_{10}$ | 2635 |
| 11 | $BV_{11}$ | 2834 |
| 12 | $BV_{12}$ | 2887 |
| 13 | $BV_{13}$ | 3140 |
| 14 (unused) | $BV_{14}$ | 3299 |

**Calculate fusionNum using SAD-based threshold**

**Fusion information for set0**
- fusionNum: 3
- Fusion BVs: $\{BV_0, BV_1, BV_2\}$

**Fusion information for set1**
- fusionNum: 5
- Fusion BVs: $\{BV_5, BV_6, BV_7, BV_8, BV_9\}$

**Fusion information for set2**
- fusionNum: 4
- Fusion BVs: $\{BV_{10}, BV_{11}, BV_{12}, BV_{13}\}$

**FIG. 9**

EP 4 765 815 A1

**FIG. 10**

FIG. 12

FIG. 11

**FIG. 13**

**FIG. 14**

EP 4 765 815 A1

FIG. 15

Europäisches
Patentamt

European
Patent Office

Office européen
des brevets

**EUROPEAN SEARCH REPORT**

**Application Number**

EP 24 30 7254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COBAN M ET AL: "Algorithm description of Enhanced Compression Model 14 (ECM 14)", 147. MPEG MEETING; 20240715 - 20240719; SAPPORO; (MOTION PICTURE EXPERT GROUP OR ISO/IEC JTC1/SC29/WG11) , no. m69403 21 October 2024 (2024-10-21), XP030329980, Retrieved from the Internet: URL:https://dms.mpeg.expert/doc_end_user/d ocuments/147_Sapporo/wg11/m69403-JVET-AI20 25-v1-JVET-AI2025.zip JVET-AI2025-v1.docx [retrieved on 2024-10-21] * pages 11-14, paragraph 3.1.7 * ----- | 1-15 | INV. H04N19/52 H04N19/57 H04N19/59 H04N19/593 |
| Y | WO 2024/002895 A1 (INTERDIGITAL CE PATENT HOLDINGS SAS [FR]) 4 January 2024 (2024-01-04) * paragraphs [0145] - [0151] * ----- | 1-15 | |
| A | RUIZ COLL (OFINNO) D ET AL: "EE2-1.11: IntraTMP search range extension with adaptive sampling", 33. JVET MEETING; 20240117 - 20240126; TELECONFERENCE; (THE JOINT VIDEO EXPLORATION TEAM OF ISO/IEC JTC1/SC29/WG11 AND ITU-T SG.16) , no. JVET-AG0131 11 January 2024 (2024-01-11), XP030314054, Retrieved from the Internet: URL:https://jvet-experts.org/doc_end_user/ documents/33_Teleconference/wg11/JVET-AG01 31-v1.zip JVET-AG0131_v1.docx [retrieved on 2024-01-11] * the whole document * ----- -/-- | 1-15 | **TECHNICAL FIELDS SEARCHED (IPC)** H04N |

The present search report has been drawn up for all claims

| Place of search | Date of completion of the search | Examiner |
|---|---|---|
| Munich | 27 May 2025 | Lombardi, Giancarlo |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 7254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NASER (INTERDIGITAL) K ET AL: "EE2 related: BV Merge List Improvement", 147. MPEG MEETING; 20240715 - 20240719; SAPPORO; (MOTION PICTURE EXPERT GROUP OR ISO/IEC JTC1/SC29/WG11) , no. m68877 8 July 2024 (2024-07-08), XP030322471, Retrieved from the Internet: URL:https://dms.mpeg.expert/doc_end_user/d ocuments/147_Sapporo/wg11/m68877-JVET-AI02 52-v1-JVET-AI0252.zip JVET-AI0252.docx [retrieved on 2024-07-08] * the whole document * | 1-15 | |
| A | WO 2012/119766 A1 (CANON KK [JP]; LAROCHE GUILLAUME [FR]; ONNO PATRICE [FR]) 13 September 2012 (2012-09-13) * page 34, line 1 - page 37, line 18 * | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 27 May 2025 | Lombardi, Giancarlo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 30 7254

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | | Publication date | Patent family member(s) | | Publication date |
|---|---|---|---|---|---|
| WO 2024002895 | A1 | 04-01-2024 | CN | 119631407 A | 14-03-2025 |
| | | | EP | 4529730 A1 | 02-04-2025 |
| | | | IL | 317943 A | 01-02-2025 |
| | | | KR | 20250029934 A | 05-03-2025 |
| | | | TW | 202404365 A | 16-01-2024 |
| | | | WO | 2024002895 A1 | 04-01-2024 |
| WO 2012119766 | A1 | 13-09-2012 | GB | 2488798 A | 12-09-2012 |
| | | | WO | 2012119766 A1 | 13-09-2012 |

EPO FORM P0459

For more details about this annex : see Official Journal of the European Patent Office, No. 12/82